Europäisches Patentamt

European Patent Office

Office européen des brevets

(19)

(11) Veröffentlichungsnummer: **0 128 132**
A2

(12) # EUROPÄISCHE PATENTANMELDUNG

(21) Anmeldenummer: 84890095.7

(22) Anmeldetag: 25.05.84

(51) Int. Cl.³: **B 22 D 11/10**
B 22 D 11/12, B 22 D 27/02
B 22 D 41/00, B 22 D 41/08

(30) Priorität: 01.06.83 AT 2004/83

(43) Veröffentlichungstag der Anmeldung:
12.12.84 Patentblatt 84/50

(84) Benannte Vertragsstaaten:
BE CH DE FR GB IT LI LU NL SE

(71) Anmelder: VEREINIGTE EDELSTAHLWERKE
AKTIENGESELLSCHAFT (VEW)
Elisabethstrasse 12
A-1010 Wien(AT)

(72) Erfinder: Cadek, Walter, Dipl.-Ing.
Göstingerstrasse 136 A
A-8051 Graz(DE)

(74) Vertreter: Widtmann, Georg, Dr.
Vereinigte Edelstahlwerke Aktiengesellschaft (VEW)
Elisabethstrasse 12
A-1010 Wien(AT)

(54) Metallurgisches Gefäss.

(57) Die Erfindung betrifft ein metallugisches Gefäß (3) für hochschmelzende Legierungen, z.B. Nickelbasislegierungen, Stahl od. dgl., mit einer in sich geschlossenen Wandung, die im wesentlichen aus para- oder diamagnetischem Material besteht, welche gegebenenfalls wassergekühlt ist, und einer Bodenplatte (1) od. dgl., die gegebenenfalls zur Zufuhr eines Sromes dient, in welchem Gefäß zumindest teilweise unter Einwirkung von elektrischem Gleich- und/oder Wechselstrom eine Metallschmelze (6) erstarren gelassen wird, insbesondere Kokille für das elektrische Umschmelzen einer Elektrode durch Widerstandserhitzung einer elektrisch leitfähigen Schlacke, wobei die Kokille (3) gegebenenfalls entsprechend dem Blockwachstum anhebbar ist, und das metallurgische Gefäß elektrisch gespeiste Solenoide (10) aufweist, wobei eine Vielzahl voneinander unabhängig elektrisch anspeisbarer Solenoide (10) um das metallurgische Gefäß angeordnet ist, deren elektrische Versorgung über magnetische Meßfühler (11), die um das metallurgische Gefäß) vorzugsweise tangential zu den magnetischen Kraftlinien des vom elektrischen Gleich- und/oder Wechselstrom erregten elektromagnetischen Feldes, insbesondere im wesentlichen tangential zum metallurgischen Gefäß (3), angeordnet sind, gesteuert ist.

Fig. 2

- 1 -

Metallurgisches Gefäß

Die Erfindung bezieht sich auf ein metallurgisches Gefäß, in welchem bei Einwirkung von elektrischem Gleich- oder Wechselstrom eine Metallschmelze erstarren gelassen wird.

Um ein möglichst homogenes Gefüge beim Block- und Strangguß zu erhalten, ist es bereits bekannt, die Metallschmelze unter Einwirkung von elektromagnetischen Feldern mehrerer Spulen erstarren zu lassen. Diese Spulen werden in Abhängigkeit voneinander mit elektrischem Gleich- oder Wechselstrom beaufschlagt, sodaß beispielsweise Wanderfelder od. dgl. entstehen, wodurch die Schmelze in Relativbewegung zur Kokille gebracht wird. Die Anordnung der Spulen kann hiebei so erfolgen, daß die Schmelze um die Längsachse der Kokille gedreht wird, oder daß dieselbe in Achsrichtung strömt und in gegengesetzter Richtung wieder zurückfließt.

Es ist auch bekannt, bei metallurgischen Öfen, die mit Wechselstrom oder Gleichstrom betrieben sind, Rührspulen anzuordnen. Diese Rührspulen überlagern das durch den Strom für den Schmelzvorgang bedingte elektromagnetische Feld.

Durch den Strom, welcher die Schmelzarbeit leistet, wird, wie bereits angeführt, ein elektromagnetisches Feld aufgebaut, welches ebenfalls das Erstarren der Schmelze beeinflussen kann. Wird ein, bezogen auf die Kokille, asymmetrisches, elektromagnetisches Feld aufgebaut, so wird dadurch die in Erstarrung befindliche Schmelze, je nachdem in welchem Bereich sich die Schmelze befindet, unterschiedlich bewegt und damit ebenfalls unterschiedlich abgekühlt. Man muß bedenken, daß während des Erstarrens einer Schmelze

- 2 -

in einer Kokille, insbesondere wenn Wärme erzeugt und gegebenenfalls eine Metallschmelze nachchargiert werden, zumindest wärmebedingte Strömungen auftreten, welche dann
durch ein asymmetrisches Magnetfeld abgelenkt werden. Derartige asymmetrische Magnetfelder können beispielsweise
bei dem Elektroschlackeumschmelzen auftreten, wobei es
nicht erforderlich ist, daß der gesamte Block umgeschmolzen
werden muß, sondern es kann vorerst in die Kokille auch
eine Schmelze eingebracht werden, und lediglich der sogenannte Schopfheizprozeß mit einer Elektrode durchgeführt
werden. Oben angeführte asymmetrische Magnetfelder können
auch bei einem Lichtbogenofen od. dgl. auftreten.

Die vorliegende Erfindung hat sich zur Aufgabe gesetzt,
eine Vorrichtung zu schaffen, welche es erlaubt, ein bestimmtes und erwünschtes elektromagnetisches Feld, um ein
metallurgisches Gefäß aufzubauen.

Bislang hat man lediglich versucht, durch eine bestimmte
Anordnung der Zuführleitungen für den Schmelzstrom ein
besonders symmetrisch ausgerichtetes elektromagnetisches
Feld zu erreichen. Diese Bemühungen sind jedoch in der
Regel dann zum Scheitern verurteilt, wenn die Stromrückleitung nicht exakt koaxial durch einen rohrförmigen Leiter erfolgt, sondern durch eine oder mehrere Leiter, die
nicht genügend weit von der Schmelze entfernt angeordnet
sind (quasi koaxiale Stromrückleitung). Besonders durch
nahe an der Schmelze angeordnete Rückleiter können erhebliche magnetische Querfelder in der Schmelze entstehen.
Auch bei exakt koaxialer rohrförmiger Rückleitung kommt
es, durch Alterung bzw. Verschmutzung der meist vorhandenen Kontaktstellen, zu unterschiedlichen Übergangswiderständen und damit zur Einbuße der koaxialen Stromführung.
Magnetische Querfelder, die von benachbarten Öfen oder Anlagen herrühren, oder die durch ferromagnetische Materialien in der Nähe des metallurgischen Gefäßes hervorgerufen werden, stellen bei herkömmlichen Anlagen ein weiteres Problem dar.

Das erfindungsgemäße metallurgische Gefäß für hochschmelzende Legierungen mit einer in sich geschlossenen Wandung, die im wesentlichen aus einem para- oder diamagnetischen Material besteht, welche gegebenenfalls wassergekühlt ist, und einer Bodenplatte od. dgl., die gegebenenfalls zur Zufuhr eines Stromes dient, in welchem Gefäß zumindest teilweise bei Einwirkung von elektrischem Gleich- und/oder Wechselstrom eine Metallschmelze erstarren gelassen wird, insbesondere Kokille, für das elektrische Umschmelzen einer Elektrode durch Widerstandserhitzung einer elektrisch leitfähigen Schlacke, die gegebenenfalls entsprechend dem Blockwachstum anhebbar ist, wobei das metallurgische Gefäß elektrisch gespeiste Solenoide aufweist, besteht im wesentlichen darin, daß eine Vielzahl voneinander unabhängig elektrisch anspeisbarer Solenoide um das metallurgische Gefäß angeordnet ist, deren elektrische Versorgung über magnetische Meßfühler, die um das metallurgische Gefäß, vorzugsweise tangential zu den magnetischen Kraftlinien des vom elektrischen Gleich- und/ oder Wechselstrom erregten elektromagnetischen Feldes, insbesondere im wesentlichen tangential zum metallurgischen Gefäß, angeordnet sind, gesteuert ist. Mit einer derartigen Vorrichtung kann jedes erwünschte elektromagnetische Feld eingestellt werden, wobei gleichzeitig die Möglichkeit besteht, die Magnetfelder z.B. in transversaler Richtung zur Achse des metallurgischen Gefäßes vollständig zu kompensieren. Die magnetischen Meßfühler messen das jeweils bestehende Magnetfeld, wobei dann, wenn beispielsweise eine vollständige Kompensation gewünscht wird, über eine entsprechende Kompensationsschaltung die Anspeisung der Solenoide jeweils so erfolgt, daß ein entgegengesetztes Magnetfeld entsteht. Durch die Vielzahl der Solenoide kann eine besonders feine Kompensation erreicht werden, da die Intensität der kompensierenden Magnetfelder geringer gehalten werden kann; dies ist insbesondere deshalb von Vorteil, da die Intensität mit dem Quadrat der Entfernung vom Solenoid abnimmt.

Gemäß einem weiteren Merkmal der Erfindung sind die Solenoide zumindest im in der Höhe des von der Schmelze umspülten Bereiches des metallurgischen Gefäßes angeordnet. Dadurch wird eine besonders einfache Vorrichtung geschaffen, die es erlaubt, gerade im bevorzugt zu kompensierenden Bereich die höchste Feldstärke zu erreichen.

Sind die Achsen der Solenoide im wesentlichen normal zur elektrischen Flußrichtung des elektrischen Gleich- und/ oder Wechselstromes im Block angeordnet, so ist eine besonders gute Vorrichtung gegeben, die zur Kompensation von Transversalfeldern dient.

Sind die Meßfühler und vorzugsweise die Solenoide an einem um die Kokille angeordneten Träger vorgesehen, der entlang der Aufbaurichtung des Blockes bewegbar ist, so kann mit einer einzigen Vorrichtung fortlaufend die Kompensation durchgeführt werden.

Ist jeder magnetische Meßfühler mit einer eigenen Steuerung für die Ansteuerung von zumindest einem Solenoid verbunden, so ist dadurch eine besonders robuste Vorrichtung gegeben, die auch über lange Zeiträume dem besonders robusten Betriebsverhalten in einem Stahlwerk Rechnung tragend einen störungsfreien Betrieb gewährleistet.

Ist der magnetische Meßfühler, gegebenenfalls mit der Steuerung, im Solenoid, insbesondere in der Achse, vorzugsweise im Symmetriezentrum desselben angeordnet, so ist eine besonders platzsparende Vorrichtung gegeben, wobei gleichzeitig ein besonders gutes Meßergebnis erhalten werden kann.

Als magnetischer Meßfühler kann gemäß der Erfindung ein Hallgenerator verwendet werden, mit welchem über eine einfache Brückenschaltung eine besonders gute Kompensation erreichbar ist.

Es können Meßfühler und Steuerung eine eigene Kühlung, insbesondere Wasserkühler, aufweisen, wodurch eine besonders gute Temperatursteuerung derselben gegeben ist, sodaß diese gegebenenfalls enganschließend am metallurgischen Gefäß angeordnet sein können. Eine besonders gute Kompensation der elektromagnetischen Felder kann dann erreicht werden, wenn die einzelnen Solenoide ringförmig um das Gefäß angeordnet sind, und einander überlappen.

Die Steuerung des magnetischen Feldes ist umso genauer durchzuführen, je kleiner die Solenoide sind. Es hat sich hiebei gezeigt, daß zumindest zwei Reihen von Solenoiden untereinander angebracht, sich besonders vorteilhaft auswirken können.

Eine besonders störungsfreie Anordnung der Meßfühler ist dann gegeben, wenn die Solenoide untereinander angebracht sind, wobei die Meßfühler auf einer Erzeugenden liegen.

Zur Steuerung des magnetischen Feldes ist es besonders vorteilhaft, wenn die einzelnen Solenoide eine Form aufweisen, die der äußeren Form des metallurgischen Gefäßes

- 6 -

teilweise entspricht, sodaß von den Solenoiden eine im gleichen Abstand vom metallurgischen Gefäß befindliche Hülle gebildet ist.

Eine weitere Steuerung des magnetischen Feldes kann dadurch erreicht werden, daß die Solenoide schwenkbar angeordnet sind.

Das durch den Kompensationsstrom im Solenoid erzeugte Magnetfeld ist für die beschriebene Anwendung im allgemeinen innerhalb des Solenoids genügend homogen. Für extreme Anwendungen ist es jedoch möglich, durch entsprechende Verteilung der einzelnen Windungen des Solenoids über die Fläche ein homogenes Kompensationsfeld zu erzeugen. Insbesondere kann durch eine kleine zusätzliche Spule direkt um den Meßfühler das Kompensationsfeld im Bereich des Fühlers verstärkt oder geschwächt werden, sodaß insgesamt - im Mittel - eine genaue Kompensation erreicht wird, ohne daß die Anordnung instabil wird. Durch die Maßnahmen kann auch bei inhomogenem Kompensationsfeld im Mittel eine Kompensation erreicht werden.

Im folgenden wird die Erfindung anhand der Zeichnung näher erläutert.

Es zeigen Fig. 1 die schematische Darstellung einer Elektroschlackeumschmelzanlage, Fig. 2 einen wassergekühlten Träger, Fig. 3 ein Solenoid mit Meßfühler, Fig. 4 eine elektronische Schaltung zur Regelung der Stromzufuhr zum Solenoid und Fig. 5 verschiedene mögliche magnetische Felder, Fig. 6 zeigt das Magnetfeld, das durch zwei symmetrische Stromrückleiter erzeugt wird.

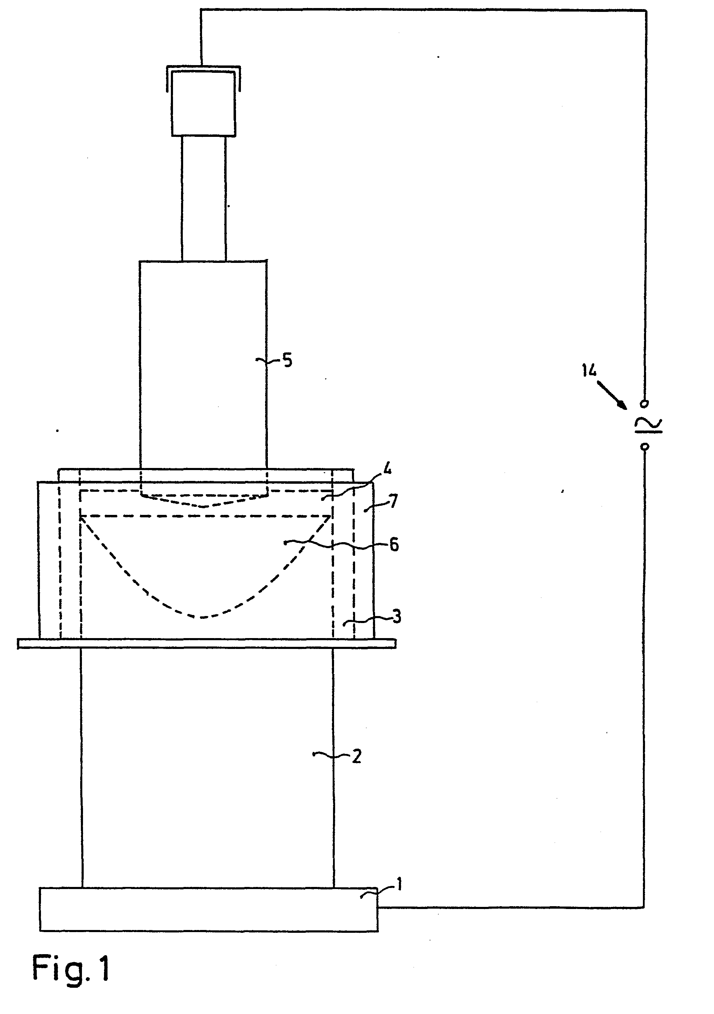

In Fig. 1 ruht auf der Bodenplatte 1 der bereits teilweise aufgebaute Block 2, welcher von einer anhebbaren Kokille 3, die wassergekühlt ist, gebildet wird. In der Kokille befindet sich ein Schlackenbad 4, in das die umzuschmelzende Elektrode 5 hineinreicht. Unterhalb des Schlackenbades befindet sich die Metallschmelze 6. Die Kokille weist außen im Bereich der erstarrenden Schmelze einen Träger 7 auf, welcher eine Vielzahl von Solenoiden und ihnen zugeordnete Meßfühler trägt. Stromquelle ist 14.

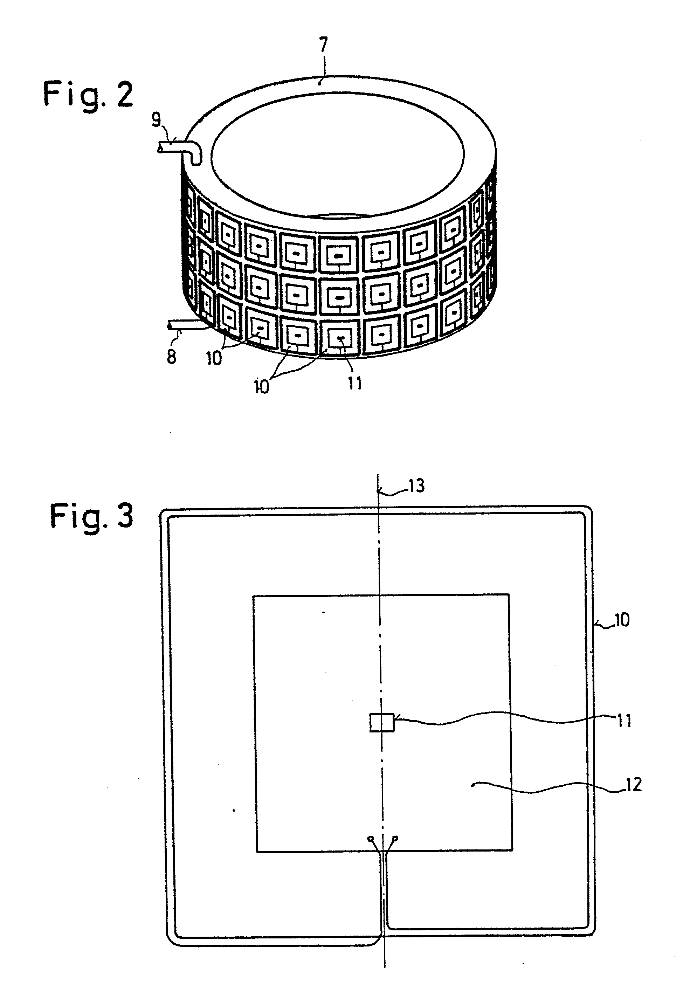

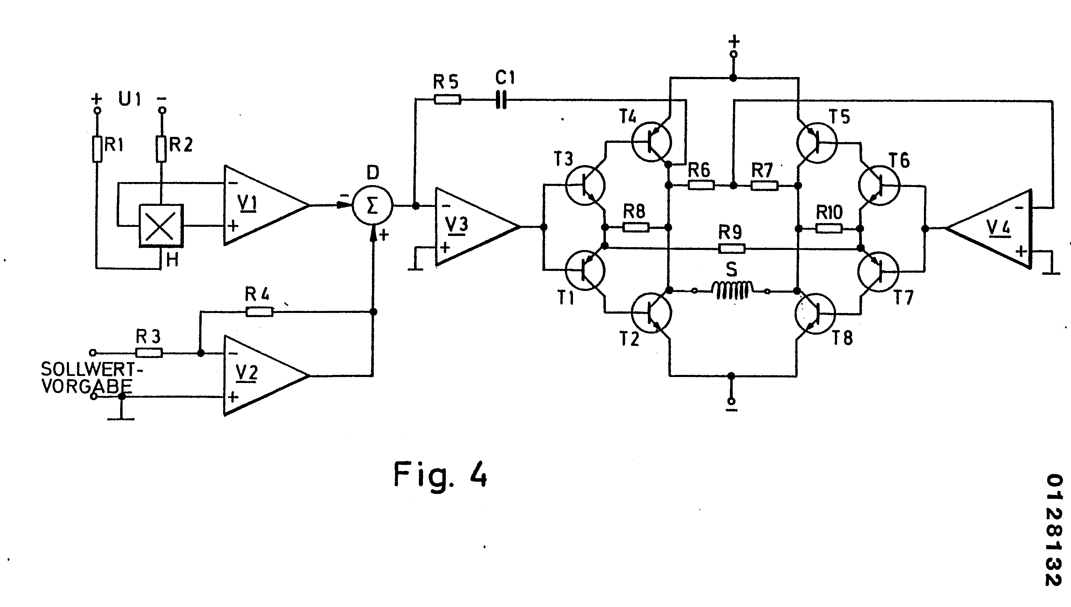

Der in Fig. 2 dargestellte Träger 7 ist doppelmantelig und weist Einlauf- bzw. Ablaufstutzen 9, 8 für ein Kühlmedium auf. Der Träger weist eine Vielzahl von Solenoiden 10, die einander überlappen können, auf, die in drei Reihen untereinander angeordnet sind. Die Solenoide sind der Form des Trägers, welcher seinerseits wieder der Form der Kokille angepaßt ist, entsprechend geformt oder können etwa tangential zur Kokille liegen. Im Zentrum der Solenoide ist jeweils ein Meßfühler 11 angeordnet, um welchen ein zusätzliches Solenoid zur Beeinflussung des zu hemmenden Feldes angeordnet sein kann, wobei die untereinander angeordneten Meßfühler auf einer Erzeugenden liegen. Wie insbesondere der Fig. 3 entnehmbar, ist der Meßfühler auf einer Schaltungsplatte 12 befestigt, welcher die elektronische Schaltung trägt. Das Solenoid kann auch um eine Achse 13 schwenkbar sein. Als Meßfühler 11 kann ein Hallgenerator oder eine Feldplatte oder sonstig geeigneter Meßfühler für magnetische Feldstärke vorgesehen sein. Eine elektronische Schaltung ist in Fig. 4 dargestellt. Der Hallgenerator H wird von der Stromquelle $U_1$ über die Widerstände $R_1$ und $R_2$ mit einem konstanten Strom versorgt. Wird der Hallgenerator von einem Magnetfeld beaufschlagt, so gelangt sein Signal im Verstärker $V_1$ zur Verstärkung. Dieses verstärkte Signal wird im Differenzbildner D mit einem aus dem Verstärker $V_2$

und den Widerständen $R_3$ und $R_4$ vorgegebenen Sollwert verglichen. Das aus dem Differenzwertbildner D ausgehende Signal wird im Verstärker $V_3$ verstärkt und dem ersten Brückenzweig mit den Transistoren $T_1$, $T_2$, $T_3$ und $T_4$ zugeführt. Der Widerstand $R_5$ bestimmt den Proportionalanteil und der Kondensator $C_1$ den Integralanteil der Reglereigenschaft. Durch den Verstärker $V_4$ wird der zweite Brückenzweig mit den Transistoren $T_5$, $T_6$, $T_7$ und $T_8$ gegenphasig zum ersten Brückenzweig gesteuert. Dadurch wird das Solenoid S mit einem Strom versorgt, der durch den Vergleich des aus dem Hallgenerator ausgehenden Signals mit dem Sollwert bestimmt ist. Die Widerstände $R_6$ und $R_7$ ermöglichen einen symmetrischen Betrieb der Brücke, wohingegen die Widerstände $R_8$, $R_9$ und $R_{10}$ den Ausgangsspannungsbereich der Brücke erweitern.

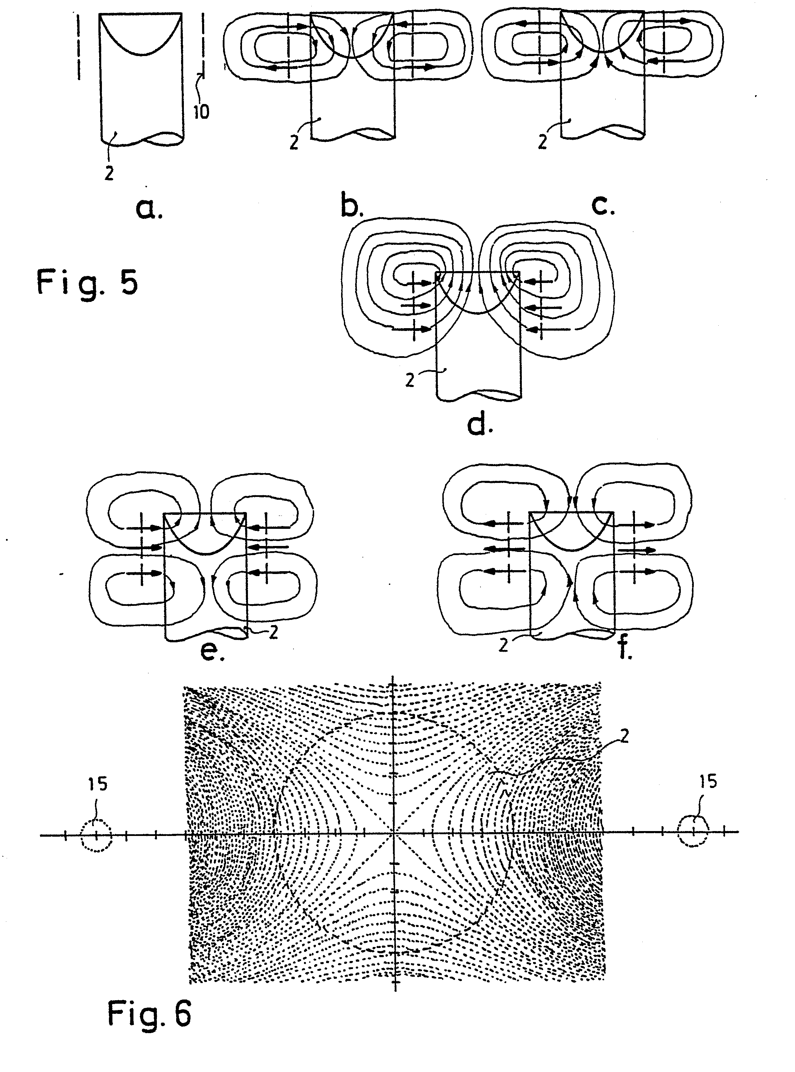

In Fig. 5 ist schematisch ein Block 2 dargestellt, welcher von Solenoiden 10, nur teilweise dargestellt, umgeben ist. Die Steuerung des magnetischen Feldes kann nun auf völlig unterschiedliche Art und Weise erfolgen. So kann die Steuerung so erfolgen, daß der Block, wie unter a dargestellt, feldfrei ist oder wie unter b, daß ein Feld in Blockachse nach unten gerichtet ist, oder wie in c, daß das Feld in Blockachse nach oben gerichtet ist, oder wie in d, daß das Feld konzentrisch nach oben gerichtet ist, bzw. ein Feld, daß zur Mitte gerichtet ist, gemäß e, oder aus der Mitte gerichtet ist, gemäß f.

Die Solenoide samt Steuerung können entweder direkt an einer Kokille oder, wie im Beispiel dargelegt, auf einem Träger angeordnet sein.

Fig. 6 zeigt das Magnetfeld, das durch den Strom in den beiden symmetrisch angeordneten Rückleitern 15 hervorgerufen wird. Es ist deutlich erkennbar, daß die Feldlinien durch die Blockoberfläche in den Block 2 eindringen.

Mit der erfindungsgemäßen Vorrichtung kann beispielsweise die Horizontalkomponente des Magnetfeldes vollständig kompensiert werden, sodaß keine unerwünschten Beeinflussungen während des metallurgischen Vorganges eintreten.

- 10 -

P a t e n t a n s p r ü c h e   :

1. Metallurgisches Gefäß (3) für hochschmelzende Legierungen, z.B. Nickelbasislegierungen, Stahl od. dgl., mit einer in sich geschlossenen Wandung, die im wesentlichen aus para- oder diamagnetischem Material besteht, welche gegebenenfalls wassergekühlt ist, und einer Bodenplatte (1) od. dgl., die gegebenenfalls zur Zufuhr eines Stromes dient, in welchem Gefäß zumindest teilweise unter Einwirkung von elektrischem Gleich- und/oder Wechselstrom eine Metallschmelze (6) erstarren gelassen wird, insbesondere Kokille für das elektrische Umschmelzen einer Elektrode durch Widerstandserhitzung einer elektrisch leitfähigen Schlacke, wobei die Kokille (3) gegebenenfalls entsprechend dem Blockwachstum anhebbar ist, und das metallurgische Gefäß elektrisch gespeiste Solenoide (10) aufweist, dadurch gekennzeichnet, daß eine Vielzahl voneinander unabhängig elektrisch anspeisbarer Solenoide (10) um das metallurgische Gefäß angeordnet ist, deren elektrische Versorgung über magnetische Maßfühler (11), die um das metallurgische Gefäß, vorzugsweise tangential zu den magnetischen Kraftlinien des vom elektrischen Gleich- und/oder Wechselstrom erregten elektromagnetischen Feldes, insbesondere im wesentlichen tangential zum metallurgischen Gefäß (3), angeordnet sind, gesteuert ist.

2. Metallurgisches Gefäß nach Anspruch 1, dadurch gekennzeichnet, daß die Solenoide (10), zumindest im in der Höhe des von der erstarrenden Schmelze umspülten Bereiches des metallurgischen Gefäßes (3) angeordnet sind.

3. Metallurgisches Gefäß nach Anspruch 1 oder 2, dadurch gekennzeichnet, daß die Achsen der Solenoide (10) im wesentlichen normal zur Flußrichtung des elektrischen Gleich- und/oder Wechselstromes im Block angeordnet
sind.

4. Metallurgisches Gefäß nach einem der Ansprüche 1, 2
oder 3, dadurch gekennzeichnet, daß die magnetischen Meßfühler (11) an einem um die Kokille (3) angeordneten
Träger (7) vorgesehen sind, der entlang der Aufbaurichtung
des Blockes (2) bewegbar ist.

5. Metallurgisches Gefäß nach Anspruch 4, dadurch gekennzeichnet, daß am Träger (7) zusätzlich die Solenoide (10)
angeordnet sind.

6. Metallurgisches Gefäß nach einem der Ansprüche 1 bis 5,
dadurch gekennzeichnet, daß jeder magnetische Meßfühler (11)
mit einer eigenen Steuerung für die Ansteuerung von zumindest einem Solenoid verbunden ist.

7. Metallurgisches Gefäß nach einem der Ansprüche 1 bis 6,
dadurch gekennzeichnet, daß jeweils die magnetischen Meßfühler (11), gegebenenfalls mit der Steuerung, in einem
Solenoid (10), insbesondere in der Achse, vorzugsweise im
Symmetriezentrum desselben angeordnet sind.

8. Metallurgisches Gefäß, nach einem der Ansprüche 1 bis 7,
dadurch gekennzeichnet, daß der Meßfühler (11) ein Hallgenerator ist.

9. Metallurgisches Gefäß nach einem der Ansprüche 1 bis 8,
dadurch gekennzeichnet, daß Meßfühler und die Steuerung
eine eigene Kühlung, insbesondere Wasserkühlung, aufweisen.

10. Metallurgisches Gefäß nach einem der Ansprüche 1 bis 9,
dadurch gekennzeichnet, daß die einzelnen Solenoide (10)
ringförmig um das Gefäß (3) angeordnet sind, und einander
überlappen.

11. Metallurgisches Gefäß nach einem der Ansprüche 1 bis 10, dadurch gekennzeichnet, daß zumindest zwei Reihen von Solenoiden (10) untereinander vorgesehen sind.

12. Metallurgisches Gefäß nach einem der Ansprüche 1 bis 11, dadurch gekennzeichnet, daß die Solenoide (10) untereinander angeordnet sind, wobei die Meßfühler (11) auf einer Erzeugenden liegen.

13. Metallurgisches Gefäß nach einem der Ansprüche 1 bis 12, dadurch gekennzeichnet, daß die einzelnen Solenoide eine Form aufweisen, die der äußeren Form des metallurgischen Gefäßes (3) teilweise entspricht, sodaß von den Solenoiden (10) eine im gleichen Abstand vom metallurgischen Gefäß befindliche Umhüllende gebildet ist.

14. Metallurgisches Gefäß nach einem der Ansprüche 1 bis 13, dadurch gekennzeichnet, daß die Solenoide (10) schwenkbar angeordnet sind.

15. Metallurgisches Gefäß nach einem der Ansprüche 1 bis 14, dadurch gekennzeichnet, daß die Meßfühler (11) zusätzliche, sie unmittelbar umgebende Solenoide (10) aufweisen.

Fig.1

**Fig. 2**

**Fig. 3**

Fig. 4

a.

b.

c.

Fig. 5

d.

e.

f.

Fig. 6